# EUROPEAN PATENT SPECIFICATION

(11) **EP 2 463 349 B1**
(45) Date of publication and mention of the grant of the patent: **18.06.2014**
(21) Application number: 10194193.8
(22) Date of filing: 08.12.2010
(51) Int. Cl.: C09K 8/035, C09K 8/36

(54) **Fluorinated acrylic polymer compositions as fluid loss additives in drilling fluids**
Fluorierte Akrylpolymerzusammensetzungen als Flüssigkeitsverlust-Zusatzstoffe in Bohrflüssigkeiten
Compositions de polymères acryliques fluorés comme additifs de pertes de fluide dans des fluides de forage

(43) Date of publication of application: 13.06.2012
(73) Proprietor: 3M Innovative Properties Co., St. Paul, MN 55133-3427 (US)
(72) Inventor: Dams, Rudi, 2070 Zwijndrecht (BE); Opstal, Tom, 2070 Zwijndrecht (BE)
(74) Representative: Kurz, Arnd

(56) References cited:
- EP-A1- 0 624 710
- WO-A1-2008/156970
- WO-A2-2010/132333
- WO-A2-2010/141541

## Description

### Field

The present invention relates to compositions comprising fluorinated acrylic polymers as additives in drilling fluids for reducing the loss of drilling fluid in a drilling process. The present invention also relates to a method for reducing the loss of drilling fluids in a drilling operation.

### Background

During drilling operations, in particular drilling operations into inorganic materials, such as cement or subterranean formations drilling fluids are employed to facilitate the drilling. The drilling fluid may have several functions, including for example maintaining hydrostatic pressure, cooling and lubricating the bit and string, lifting and suspending cuttings and stabilizing the wellbore. During drilling operations, the drilling fluid can come in contact with porous formations and some of the drilling fluid can get lost due to penetration of the fluid into the pores of the formation. The extent of the fluid loss is dependent on the porosity and permeability of the formation and can be considerably large. Fluid loss creates several problems, such as excessive torque and drag, prolonged rig time, installation of additional casing, loss of expensive drilling fluids and bore-hole instability. Loss of drilling fluid is also undesirable for environmental reasons.

In order to reduce or overcome loss of drilling fluid, typically a fluid loss additive is added to the drilling fluid. The fluid loss additive reduces the fluid flow to the formation by forming a filter-cake with small permeability. Known examples of fluid loss additives include graphitic carbon or graphite particles, or synthetic polymers, such as for example oil soluble silicone resin particles (WO 04/013251), polymeric polypropylene granules (WO 06/040578) and elastomeric, non-agglomerated acrylic microspheres (WO 2008/156970).

WO 2010/132333 discloses a drilling fluid composition comprising a fluorinated acrylic polymer comprising fluorinated segments (acrylic) and non - fluorinated segments (polyoxyalkylene), having a number average molecular weight of e.g. 50000 g/mol.

EP 0 624 710 discloses an oil well treatment fluid comprising a fluorinated acrylic polymer comprising a fluorinated acrylic monomer, e.g. N-ethylperfluorooctane sulfonamido ethylacrylate and a non-fluorinated acrylic monomer, e.g. octadecylmethycrylate.

Fluid loss additives may be subjected to ageing, in particular when applied at increased temperatures and/or increased pressure, for example, at temperatures encountered at high drilling frequencies or drilling in geothermal wells and or natural gas wells where temperatures can go up to 150°C or 175°C.

Therefore, there is a need for effective fluid loss additives that remain effective also at high temperatures, for example at temperatures greater than 100°C and up to 150°C or 175°C.

### Summary

It has been found that fluorinated acrylic polymers are effective in reducing fluid loss even after exposure to temperatures as high as 170°C.

Therefore, in the following there is provided the use of a composition comprising a fluorinated acrylic polymer dissolved, suspended or dispersed in an organic liquid as an additive in a drilling fluid for preventing or reducing loss of the drilling fluid into material surrounding a borehole in a drilling operation to produce the borehole, wherein the fluorinated acrylic polymer comprises repeating units derived from at least one fluorinated acrylic monomer, wherein in case of a suspension or dispersion the polymer is present in particles of a particle size below 0.095 microns and is as defined in the claims.

In another aspect there is provided a drilling fluid comprising a composition as described above and further comprising at least 10% by weight of a second organic liquid.

In yet another aspect there is provided a method for reducing fluid loss of a drilling fluid into the material surrounding a borehole generated in a drilling operation, said method comprising adding to the drilling fluid a composition as described above and circulating said drilling fluid in the borehole during the drilling of the borehole.

### Detailed Description

Before any embodiments of this disclosure are explained in detail, it is to be understood that the disclosure is not limited in its application to the details of compositions and the arrangement of components set forth in the following description. The use of "including," "containing", "comprising," or "having" and variations thereof is meant to be of broad scope and is meant to encompass the items listed thereafter, equivalents thereof and further items. The word "consisting of" is meant to be of limiting scope and is meant to encompass only the items listed thereafter and equivalents thereof but not any additional items.

The use of "a" or "an" is meant to encompass "one or more". Any numerical range recited herein is intended to include all values from the lower value to the upper value of that range. For example, a concentration range of from 1% to 50% is intended to be an abbreviation and to expressly disclose the values between the 1% and 50%, such as, for example, 2%, 40%, 10%, 30%, 1.5 %, 3.9 % and so forth.

It has been found that fluorinated acrylic polymers when used as additives to drilling fluids can reduce loss of the drilling fluid in drilling operations. Such additives have been found to remain effective in reducing fluid loss even after exposure to high temperatures, such as for example at 150°C or even at 175°C.

Preferably, the fluorinated acrylic polymers are provided in the form of a solution, dispersion or suspension in an organic liquid. Such compositions containing the fluorinated acrylic polymers may be directly added to the drilling fluid. The polymers may be used as prepared without the need of separating, isolating and purifying them which is economically adventageous.

The individual components and methods steps will be described in greater detail in the following.

### Fluorinated acrylic polymer compositions

The fluorinated acrylic polymer compositions comprise fluorinated acrylic polymers having repeating units derived form at least one fluorinated acrylic monomer and at least one non-fluorinated acrylic monomer as defined in the claims.

The compositions may be in the form of a solution comprising the fluorinated acrylic polymers dissolved in an organic liquid.

The compositions may be in the form of a dispersion or suspension comprising the fluorinated acrylic polymers dispersed or suspended in an organic liquid.

In case the compositions are in the form of a dispersion or suspension the fluorinated acrylic polymers are present in a particle size of less than 0.95 microns. This means the diameter or longest dimension of the particles is less than 0.95 microns. Particle size is the number average and can be determined by light scattering, for example using a Zetasizer from Malvern Instruments.

The polymers are preferably soluble in an organic liquid. This means that at least 10g of polymer can be dissolved in 90 g organic liquid at ambient conditions (25°C and 10⁶ Pa [1 bar]), which corresponds to a solid content of 10%. Preferably solutions having a solid content of at least 20, or at least 30 or at least 45% may be prepared.

"Organic liquids" as used herein are compounds containing at least one hydrocarbon groups, preferably at least one CH2-group. These compounds are liquid ambient conditions (25°C, 1 bar). The organic liquids preferably have a melting point of less than 20°C. The organic liquids preferably have a boiling point of greater than 40°C, greater than 60°C, preferably greater than 80°C. Examples of organic liquids include for example glycols (such as but not limited to dipropylene glycol or tripropylene glycol), glycol ethers (such as but not limited to dipropoylene glycol ethers, tripropylene glycol ether), aliphatic and aromatic esters (such as for example ethylacetate), aromatic or aliphatic ketones ( such as for example methyl ethyl keotne (MEK). Preferably at least 25% by weight, at least 30% by weight or at least 40% by weight, more preferably at least 45% by weight of the fluorinated acrylic polymer can be dissolved in at least one of the following solvents: toluene, heptane, methyl ethyl ketone, tripropylene glycol butyl ether or a mixture of ethylacetate/heptane of a 10 : 90 to 40: 60 ratio (by volume). The weight percentages given above are based on the weight of solvent.

The polymers are substantially non-crosslinked. Substantially non-crosslinked means the polymers are not cross-linked or only to such a small degree that the polymers have particle sizes of less than 0.095 microns. This way the polymers remain soluble, dispersable or suspendable in the organic liquids as described above.

Furthermore, when added to the drilling fluid, the fluorinated acrylic polymers remain soluble or can be mixed/dispersed suspended with organic liquids commonly used in drilling fluids, like but not limited to petroleum oil, e.g. crude oil, diesel oil biodiesel oil, kerosene, mineral oil, gasoline, naphtha, toluene or mixtures thereof.

### Fluorinated acrylic monomer

The fluorinated acrylic polymer comprises units derived from at least one fluorinated acrylic monomer. In a preferred embodiment, the fluorinated acrylic monomer can be represented by the formula:
Rf-Q-XC(O)-C(R¹)=CH2,
wherein Rf represents a fluorinated aliphatic group having 3 to 8 carbon atoms, X represents oxygen or nitrogen, Q is an organic divalent linking group, and R1 represents hydrogen, a lower alkyl group having 1 to 4 carbon atoms.

The fluorinated aliphatic group Rf may comprise hydrogen atoms, but is preferably a perfluorinated radical. Prefluorinated means that all hydrogens are replaced by fluorine atoms. Preferably, Rf is a saturated, non-polar, monovalent aliphatic radical containing 3 to 8 carbon atoms. It can be a straight chain or a branched chain and optionally it can contain O or N atoms. Especially suitable fluorinated monomers are those of which the Rf-group is of the formula C₄F₉- or C₆F₁₃- or mixtures thereof.

The linking group Q links the fluorinated aliphatic group Rf to the acrylic group. Linking group Q is generally non-fluorinated and preferably contains from 1 to about 20 carbon atoms. Q can optionally contain oxygen, nitrogen, or sulfur-containing groups or a combination thereof. Q is free of functional groups that substantially interfere with free-radical polymerization (e.g., polymerizable olefinic double bonds and thiols). Examples of suitable linking groups Q include straight chain, branched chain or cyclic alkylene, arylene, aralkylene, sulfonyl, sulfoxy, sulfonamido, carbonamido, carbonyloxy, urethanylene groups and combinations thereof such as sulfonamidoalkylene.

In a particular embodiment, the fluorinated acrylic monomer can be represented by the formula:
CₙF₂ₙ₊₁Q¹CH₂CH₂OC(O)C(R)=CH₂
wherein n is an integer from 3 to 8 or a mixture thereof, Q1 is an organic linking group selected from a chemical bond, a sulfonamido or a carboxamido group and R is H or CH3

Preferably the fluorinated acrylic monomer can be represented by the formulae:
C_{q}F_{2q+1}SO₂N(R')CH₂CH₂OC(O)C(R)=CH₂
and
CₚF₂ₚ₊₁CH₂CH₂OC(O)C(R)=CH₂
or a mixture thereof,
and wherein R represents H or CH3, R' represents CH3 or C2H5, q is 4 or 6 and p is 4, 6 or 8.

Examples of fluorinated acrylic monomers include but are not limited to:
CF₃(CF₂)₃SO₂N(CH₃)CH₂CH₂OC(O)C(R)=CH₂;
CF₃(CF₂)₃SO₂N(CH₂CH₃)CH₂CH₂OC(O)C(R)=CH₂;
(CF₃)₂CFCF₂SO₂N(CH₃)CH₂CH₂OC(O)C(R)=CH₂;
(CF₃)₂CFCF₂SO₂N(CH₂CH₃)CH₂CH₂OC(O)C(R)=CH₂;
CF₃CF₂CF₂CF₂CH₂CH₂OC(O)C(R)=CH₂ and
CF₃(CF₂)₅CH₂CH₂OC(O)C(R)=CH₂;
CF₃(CF₂)₃SO₂N(CH₃)CH₂CH(CH₃)OC(O)C(R)=CH₂;
CF₃(CF₂)₃CH₂OC(O)C(R)=CH₂;
wherein R is hydrogen or methyl.

Particular preferred fluorinated acrylic monomers include:
CF₃(CF₂)₃SO₂N(CH₃)CH₂CH₂OC(O)C(R)=CH₂ and CF₃(CF₂)₅CH₂CH₂OC(O)C(R)=CH₂;
wherein R is hydrogen or methyl.

### Non-fluorinated acrylic monomers

The fluorinated acrylic polymer further comprises units derived from at least one non-fluorinated acrylic monomer represented by the formula:
Rₕ-XC(O)C(R')=CH₂
wherein Rh represents a hydrocarbon group having from 1 to 22 carbon atoms and optionally comprising nitrogen and oxygen atoms, R' is H or CH3 and X represents oxygen or nitrogen.

In one particular embodiment, the non-fluorinated acrylic monomer is an alkyl terminated acrylic monomer. Such monomers can be represented by the formula (I):

CᵣH₂ᵣ₊₁XCOC(R')=CH2 (I)

wherein r represents an integer from 1 to 22, R' is H or CH3 , X represents oxygen or nitrogen.

Examples of alkyl terminated acrylic monomers include monofunctional alkyl acrylate esters and alkyl methacrylate esters, in particular ester of acrylic acid or methacrylic acid and non-tertiary alkyl alcohols and mixtures thereof. The alkyl groups of the alkyl ester may have from 1 to 22 carbon atoms. Included within this class of monomers are, for example, acrylate monomers selected from the group consisting of isooctyl acrylate, 2-ethyl hexyl acrylate, 4-methyl-2-pentyl acrylate, 2-methylbutyl acrylate, isoamyl acrylate, sec-butyl acrylate, n-butyl acrylate, isobutyl acrylate, tert-butyl acrylate, isodecyl acrylate, isononyl acrylate, isobornyl acrylate and mixtures thereof. Further useful acrylate monomers include the methacrylate analogues of the examples above and mixtures thereof, including mixtures of acrylate and methacrylate monomers. Preferred acrylate monomers include isooctyl acrylate, 2-ethylhexyl acrylate, and mixtures thereof.

Further useful examples include acrylamides and methacrylamides. Examples include acrylamide, dimethylacrylamide, N-tert butyl acrylamide, diacetone acrylamide, N-butoxymethyl acrylamide, N-isopropyl acrylamide and the methacrylamide analogues thereof.

In a particular embodiment, the alkyl acrylic monomer may be an aminoalkyl acrylic monomer. Particularly useful examples include those represented by the formula (II):

(R¹)(R²)N(CH₂)ₘXC(O)C(R)=CH₂ (II)

wherein m is an integer from 1 to 6, R1 and R2 independently represent H or an alkyl group having from 1 to 10 carbon atoms and optionally containing nitrogen or oxygen atoms, an aryl group or aralkyl group ; X represents an O, N or S atom

Suitable examples include amino group containing alkyl acrylates and methacrylates and salts thereof. Examples include N,N-dimethylaminoethyl acrylate, N,N-dimethylaminomethyl acrylate, N,N-diethylaminomethyl acrylate, N,N-diethylaminoethyl acrylate, N,N-diethylaminoethyl acrylate, N,N diethylaminopropyl acrylate, N,N dimethylaminopropyl acrylate, 2-(Tert-butylamino)ethyl acrylate, 2-aminoethyl methacrylate hydrochloride, Diisopropylamino ethyl acrylate, 2-N-morpholinoethyl acrylate, 3-dimethyl amino neopentyl acrylate, N-t-butylaminoethylacrylate ; their methacrylate analogues and mixtures thereof.

Further suitable examples of amino group containing acrylamides and methacrylamides, include N,N dimethylaminopropyl acrylamide, N,N dimethylaminopropyl methacrylamide, N-(2-aminoethyl)methacrylamide hydrochloride, N-(t-BOC-aminopropyl)methacrylamide, N-[2-(N,N-dimethylamino)ethyl]methacrylamide, N-[3-(N,N-dimethylamino)propyl]acrylamide N-[3-(N,N-Dimethylamino)propyl]methacrylamide.

In a particular preferred embodiment, the non-fluorinated acrylic monomer comprises a blend of alkyl terminated acrylic monomers according to formula (I) above and aminoalkyl acrylic monomers according to formula (II) above.

The fluorinated acrylic polymers may further comprise units that are derived from other ethylenically unsaturated monomers that are copolymerizable with the at least one fluorinated acrylic monomer and the at least one non-fluorinated acrylic monomers. Examples of suitable monomers include vinyl monomers. Further examples include nitrogen containing vinyl monomers, such as vinyl pyridine, N-vinyl pyrrolidone and N-vinyl caprolactam.

Further suitable examples include derivatives of ethylenically unsaturated carboxylic acids and salts thereof other than those described above and ethylenically unsaturated monosulfonic acids and salts thereof. Examples include 2-acrylamido-2-methyl-1-propanesulfonic acid and salts thereof such as the sodium or potassium salt).

### Preparation of fluorinated acrylic polymers

The fluorinated acrylic polymers typically comprise the polymerization product of a) from 3 to 80 weight % of at least one fluorinated acrylic monomer and b) from 97 to 20 weight % of at least one non-fluorinated acrylic monomer or a combination of non-fluorinated acrylic monomers. In a particular embodiment, the non-fluorinated acrylic monomers are selected from monomers according to formula (I) and monomers according to formula (II) or a mixture thereof.

In a particular preferred embodiment, the fluorinated acrylic polymer comprises the polymerization product of a) from 10 to 50 weight % of at least one fluorinated acrylic monomer b) from 20 to 80 weight % of at least one monomer according to formula (I) and c) from 1 to 50 weight % of at least one monomer according to formula (II) wherein the monomers are used to give a total of from 90 to 100% by weight. In case the total is less than 100% the remainder may be made up by other monomers as described above.

The fluorinated acrylic polymers may be prepared by methods known in the art. Preferably the fluorinated acrylic polymers are prepared by solvent polymerization. The polymerization reaction can be carried out in any solvent suitable for organic free-radical reactions, but it is preferred to select a solvent that is commonly used in oil based drilling fluids. This is of particular interest because after polymerization, the polymer solution can be added to the drilling fluid as such, without additional work up or process steps. This is of particular economical benefit, as it save costs of additional working up procedures. Examples of suitable solvents include glycols, such as dipropylene glycol or tripropylene glycol, glycol ethers, aliphatic and aromatic hydrocarbons such as heptane, ethylacetate, 2-butanone and toluene. The reactants can be present in the solvent at any suitable concentration, e.g., from about 5 percent to about 55 percent by weight based on the total weight of the reaction mixture. Preferably the polymers are prepared in concentrated solutions, ranging from 30 to 55 % by weight. This provides the advantage that after polymerization; the polymer solution does not need to be up-concentrated prior to use in the drilling fluid.

A free radical initiator is generally used to initiate the polymerization reaction. Commonly known free-radical initiators can be used and examples thereof include azo compounds, such as azobisisobutyronitrile (ABIN), azo-2-cyanovaleric acid and the like, hydroperoxides such as cumene, t-butyl and t-amyl hydroperoxide, dialkyl peroxides such as di-t-butyl and dicumylperoxide, peroxyesters such as t-butylperbenzoate and di-t-butylperoxy phthalate, diacylperoxides such as benzoyl peroxide and lauroyl peroxide. The amount of initiator typically used ranges from 0.1 to 2% by weight based on the total weight of the reactants. The initiator can be added in one time prior to the polymerization. In order to increase the monomer conversion, additional initiator can be added once or twice during the polymerization.

The polymerization can be carried out in the presence of a chain transfer agent, in order to control the molecular weight of the fluorinated acrylic polymer. Suitable chain transfer agents include mercaptane containing agent, such as for example thioglycerol or octyl mercaptane. Further useful chain transfer agents include halogen containing agents, such as for example CBr₄.

The polymerization reaction can be carried out at any temperature suitable for conducting an organic free-radical reaction. Particular temperature and solvents for use can be easily selected by those skilled in the art based on considerations such as the solubility of reagents, the temperature required for the use of a particular initiator, molecular weight desired and the like. While it is not practical to enumerate a particular temperature suitable for all initiators and all solvents, generally suitable temperatures are between about 30 °C and about 200 °C.

In order to remain soluble in common used organic solvents, the polymerization is typically done in absence of a crosslinking agent and the fluorinated acrylic polymers prepared by the solvent polymerization are predominantly straight chains. Some branching may occur, but the fluorinated acrylic polymers formed are not microparticles having a diameter (or longest dimension) greater than 0.095 microns. The molecular weight of the polymers formed is not particularly critical, but should be chosen such that the fluorinated acrylic polymer remain soluble in the drilling fluid. The weight average molecular weight can range from about 800 to about 50000, preferably from 1000 to 40000 g/mole. This can be measured according to standard procedures like size exclusion chromatography (SEC).

The fluorinated acrylic polymers may have at least one glass transition temperature (Tg) equal to or above about -50°C, more suitably between about -50°C and about 125°C. For use as a fluid additive it is desirable to use fluorinated acrylic polymers having a glass transition temperature that is below the borehole temperature, for example up to about 10 °C or up to about 30°C below the borehole temperature. Glass transition temperatures can be measured by differential scanning calorimetry as known in the art.

### Use of fluorinated acrylic polymers as fluid loss additives

The fluorinated acrylic polymers described above are useful as additives for reducing the loss of drilling fluids in a drilling operation. Such drilling fluids may be organic-based drilling fluids, such as oil-based drilling fluids, including water-in-oil inverted emulsion drilling fluid, and synthetic-based drilling fluids. After polymerization, the fluorinated acrylic polymers, prepared in solvent, can conveniently be mixed with the drilling fluid in desired amounts. No additional work-up steps are needed.

The use of the fluorinated acrylic polymers as a fluid loss control additives in drilling fluids is advantageously effective in reducing fluid loss of drilling fluids into or through subterranean formation (e.g. porous formations) or formations having pre-existing or drill-induced fissures or fractures, surrounding the borehole.

Furthermore, use of the fluorinated acrylic polymers described herein as fluid loss control additive is particularly desirable in that their addition to a drilling fluid typically does not have any appreciable impact on the rheological properties of the drilling fluid, in particular organic-based drilling fluids, such as oil-based and synthetic-based drilling fluids as well as other types of organic-based drilling fluids. As a consequence, there is no need of having to add other additives to re-adjust rheological properties of the drilling fluid. The fluorinated acrylic polymers can be easily and effectively used as an additive to control loss of drilling fluid during drilling operations or as a "pill" treatment, i.e. they may be added on demand, for example when during drilling operations unacceptable levels of fluid loss are observed.

The concentration of the fluorinated acrylic polymer additive in the drilling fluid is selected for the particular drilling operation so that the concentration in the drilling fluid is sufficient to reduce fluid loss. It has been found that additives described herein have such advantageous effectiveness in controlling fluid loss that the concentration of fluorinated acrylic polymer in the drilling fluid need not be high. Favourably the concentration of the fluorinated acrylic polymer in the drilling fluid may be 5 weight % or lower, more favourably 3 weight % or lower, even more favourably 2 weight % or lower. Favourably the concentration of the fluorinated acrylic polymer in the drilling fluid is 0.1 weight % or higher, more favourably 0.3 weight % or higher, even more favourably 0.8 weight % or higher and most favourably 1 weight % or higher.

### Drilling fluid

As mentioned above, the fluorinated acrylic polymers are particularly useful as fluid loss control additives in organic-based drilling fluids. Such drilling fluids typically contain an organic liquid (also referred herein to as "second organic liquid") in an amount of at least 10 % by weight. The second organic liquid is liquid at ambient conditions and has a boiling point of at least 90°C. Examples include aliphatic and aromatic hydrocarbons, such as hydrocarbon oils, like, petroleum oil, kerosene, mineral oil, gasoline, diesel oil, naphtha and mixtures thereof. Further examples include polyethers and silicon oils. Specific examples include aliphatic and aromatic hydrocarbons having from 6 to 28 carbon atoms like heptane and toluene and polyethers having from 6 to 28 carbon atoms and at least four ether oxygens or a combination or mixture thereof.

Oil-based drilling fluids most often comprise diesel oil or mineral oil. Oil-based drilling fluids may be "all-oil mud" (i.e. oil-based drilling fluids comprising no or very low amounts of water (less than 10% by volume of an aqueous phase)) or an "invert oil-emulsion mud" (oil-based drilling fluid comprising higher amounts of water (up to 70% by volume of an aqueous phase)). Synthetic-based drilling fluids generally comprise a fluid, in particular derived from olefins, linear alpha-olefins, poly alpha-olefins, internal esters and ethers; siloxanes such as polydiorganosiloxanes or organosiloxanes; paraffins such as linear or branched paraffins; and mixtures thereof. Synthetic-based drilling fluids are similar to oil-based drilling fluids and often referred to as "pseudo-oil muds". Similar to the oil-based drilling fluids, synthetic-based drilling fluid may be provided as invert emulsion type mud (e.g. comprising up to 70% by volume of an aqueous phase). Oil-based or synthetic-based drilling fluids, may further comprise viscosity builders (e.g. organophilic clays prepared from bentonite or hectorite and aliphatic amine salts, or colloidal asphalt or polymers, such as celluloses, xanthan gum and polyacrylamides); rheological control agents (e.g. dispersants, such as polyphosphates, tannins, lignites or lignosulfonates, or surfactants); weighting agents (such as barite, hematite, magnetite, siderite, dolomite, calcite or sodium chloride); and/or other additives known in the art. Other organic-based drilling fluids include drilling fluids in which the base fluid is based on a polyfunctional alcohol or polyfunctional alcoholic derivative, such as glycols, polyglycols, polyoxyalkylene, glycol ethers, glycol esters and mixtures thereof. Such organic-based drilling fluids may also comprise viscosity builders (e.g., polymers, such as celluloses, xanthan gum, gar gum, polyacrylamides and starches); rheological control agents (e.g. dispersants); weighting agents; and/or other additives known in the art.

The drilling fluids to which fluorinated acrylic polymers are added as fluid loss additive may comprise already a common used fluid loss additive, such as for example asphaltenic compounds, such as for example Gilsonite®, graphite, lignite, natural rubber or synthetic polymers, including polystyrene and derivatives.

In general however, the fluorinated acrylic polymers are highly effective in reducing the fluid loss and not additional fluid loss additive is needed.

The concentration of fluorinated acrylic polymers added to the drilling fluids is sufficient to reduce fluid loss having regard to the particular drilling operation, subterranean formation and causes for drilling fluid loss.

The fluorinated acrylic polymers are particularly effective as fluid loss additives in oil based drilling fluids, including water-in-oil inverted emulsions. Fore examples, drilling fluids comprising 1 to 2 weight % the fluorinated acrylic polymer based on the total weight of the drilling fluid may reduce the fluid loss to 10ml or less, more preferably 8 ml or less as measured at 150°C over 30 min according to ISO 10416:2008.

The following examples are provided to further illustrate the invention but are not meant to be limiting in any way.

### EXAMPLES

### Abbreviations:

AA: Acrylic acid
MeFBSEA: C₄F₉SO₂N(CH₃)CH₂CH₂OCOCH=CH₂
Telomer C6 acrylate: C₆F₁₃CH₂CH₂OCOCH=CH₂
DEAEMA: N,N-diethylaminoethyl methacrylate (Ageflex FM2, available from BASF)
DMAEMA: N,N-Dimethylaminoethyl methacrylate, DMAEMA (Ageflex FM1, available from BASF)
DPnB: dipropylene glycol butyl ether, available from Dow Chemical.
TPnB: tripropylene glycol butyl ether, available from Dow Chemical
DMAEA: N,N- dimethylaminoethyl acrylate (Ageflex FA1, commercially available from Ciba Specialty Chemicals)
EHA: 2-ethylhexyl acrylate
Etac: ethyl acetate
IOA: iso-octyl acrylate
MEK: 2-butanone
FC-2145: Fluoroelastomer (copolymer of vinylidene fluoride and hexafluoropropene, available from Dyneon GmbH), used in Comparative Example C-4
Wako V65: 2,2'-Azobis (2,4-dimethyl valeronitrile, available from Wako)
Vazo V67: 2,2'-Azobis (2-methylbutyronitrile, available from DuPont.

### Drilling fluid:

The fluorinated acrylic polymers were evaluated as fluid loss additive in a water-in-oil emulsion drilling fluid (Versatherm™, from MI-Swaco Norge, Norway from which the fluid loss additive had been removed). Prior to testing, the drilling fluid were shaken on a GFL 3018 shaking plate (available from Gesellschaft für Labortechnik mbH, Germany) at 200 min⁻¹ during one hour to homogenize the composition.

### Synthesis of fluorinated acrylic polymers

Several fluorinated acrylic polymers, as given in table 1, were prepared according to the general procedure as outlined for polymer 1:
Polymer 1: MeFBSEA/2-EHA/DMAEA (70/10/20)

A three necked 250 ml flask fitted with condenser and mechanical stirrer was charged with 63 g (0.152 mol) MeFBSEA, 9 g (0.0488 mol) g 2-Ethylhexyl acrylate and 18 g (0.125 mol) DMAEA. 110 g of toluene was added. The monomer mixture was degassed 3 times using aspirator vacuum and purged with a nitrogen flow. The mixture was slightly heated to 45 °C to dissolve all MeFBSEA and stirred for 15 min. Then 0.18 g of initiator Vazo V-67 was added to the mixture. The temperature was set at 70 °C. After a short time a reaction exotherm between 90 -120 °C could be observed. After 4 h of reaction another 0.05 g Vazo V-67 was added and the reaction was continued during 16 h.

A part of the reaction mixture was taken for determining the solid content. The solid content was determinded thermogravimetrically. No corrections for salts or byproducts were made.

Fluorinated acrylic polymers 2 to 12 and acrylic polymer 13 were made essentially according to the same procedure, with the following variations: the amount and type of solvent was varied as indicated in table 1. Polymers 2 to 7 were made with V-65 initiator instead of V-67. During the synthesis of polymers 8 to 13 an additional 0.05 g initiator was added after 2 hours and after 4 hours reaction.

**Table 1: Composition fluorinated acrylic polymers and comparative non-fluorinated acrylic polymer**

| Polymer | Polymer Composition | Initiator | Solvent | Tg (°C) | Mn | Mw | % solids | Used in ex. |
|---|---|---|---|---|---|---|---|---|
| 1 | MeFBSEA/EHA/DMAEA 70/10/20 | 0.25 | Toluene | -5.5 | 3140 | 5805 | 45 | Ex 1 |
| 2 | MeFBSEA/IOA/DMAEA 73/09/18 | 0.33 | EtAc/Heptane 40/60 | 0.1 | 7509 | 17160 | 52 | Ex 2 |
| 3 | MeFBSEMA/IOA/DMAEA 70/10/20 | 0.25 | Toluene | 17.8 | 13852 | 27147 | 52 | Ex 3 |
| 4 | MeFBSEA/IOA/4-vinyl pyridine 24/49/27 | 0.25 | Toluene | 20.0 | 17677 | 43423 | 45 | Ex 4 |
| 5 | MeFBSEA/DMAEMA 78/22 | 0.40 | EtAc/Heptane 10/90 | 20.0 | 5558 | 19350 | 47 | Ex 5 |
| 6 | MeFBSEA/DMAEA 3/97 | 0.40 | Toluene | -38 | 853 | 1150 | 36 | Ex 6 |
| 7 | MeFBSEA/IOA/DMAEA 14/56/30 | 0.40 | TPnB | NA | 5744 | 10646 | 40 | Ex 7 |
| 8 | MeFBSEA/IOA/DMAEA 14/56/30 | 0.27 | MEK | NA | 8184 | 20954 | 40 | Ex 8 |
| 9 | MeFBSEA/IOA/DMAEA 14/56/30 | 0.34 | TPnB | NA | 8833 | 39553 | 55 | Ex 9 |
| 10 | MeFBSEA/IOA/DMAEA 30/50/20 | 0.50 | TPnB | NA | 11832 | 26327 | 45 | Ex 10 |
| 11 | Telomer C6 acrylate/IOA/DMAEMA 14/56/30 | 0.34 | TPnB | NA | 8117 | 15722 | 50 | Ex 11 |
| 12 | MeFBSEA/IOA 20/80 | 0.40 | TPnB | NA | 10213 | 26809 | 50 | Ex 12 |
| 13 | IOA/DMAEMA 65/35 | 0.40 | TPnB | NA | 7695 | 14364 | 50 | C-1 |

### Synthesis of comparative fluorinated acrylic polymers

### EHA/AA/BDDA/MeFBSEA-microparticles (92.5/2/0.5/5) (used in Comparative Example C-2)

A 4 liter reactor, equipped with a mechanical stirrer and a heating unit, was charged with 1800 grams of deionised water, 51.4 grams of ammonium lauryl sulphate and 24 grams of acrylic acid. The agitation was set to 200 rpm and the reactor was heated to 35°C. A glass flask was charged with 60 grams MeFBSEA and 1146 grams EHA, sealed and rolled during 6 hours at room temperature. Then this monomer mixture was transferred to a beaker containing 6 grams BDDA, 4.0 grams Luperox A75, and 1.0 grams of Wako V65. The mixture was stirred for 15 min. This organic phase was added to the reactor; The temperature was set at 55°C and the mixture was stirred at 600 rpm for 2 hours under an air atmosphere. Then the air supply was switched to nitrogen and the reaction was further stirred during 6 hours. After this period the reaction mixture was allowed to cool to room temperature and filtered over a cheese cloth to remove the coagulum. Microparticles having a Tg of -71 °C were obtained.

### EHA/IBOA/AA/BDDA/MeFBSEA-microparticles (77.5/10/2/0.5/10) (used in Comparative Example C-3)

EHA/IBOA/AA/BDDA/MeFBSEA (77.5/10/2/0.5/10)-microparticles were made according to the same procedure with the exception that 117 grams MeFBSEA, 936 grams EHA and 117 grams IBOA were used. The Tg was -52°C.

### Fluid loss measurement

For fluid loss measurement, a reference sample comprising drilling fluid without added fluid loss additive was measured. Examples were made using the above drilling fluids to which was added fluorinated acrylic polymer as fluid loss additive (the compositions of table 1 were used as obtained from the reaction without purification or working up steps). The fluid loss of the examples was compared with the fluid loss of drilling fluids to which other additives had been added (comparative examples). In comparative example 1 a non-fluorinated acrylic polymer was added as fluid loss additive. In comparative example 2 fluorinated acrylic microparticles were added as fluid loss additive. In comparative example 3 a fluoroelastomer polymer was added as fluid loss additive. (comparative examples). In all cases, the additives were added to give 1% by weight of additive (as solids content) based on the weight of drilling fluid.

A 1 liter bottle was charged with 384 g drilling fluid mud and fluid loss additive as given in table 2 if present. The mixture was stirred with a Polytron PT 6000 high speed mixer (available from Kinematica AG, Switzerland) at 6000 rpm during 10 min. The mixture was transferred to an aging cell and exposed to a pressure of 13,8·10⁶ Pa [200 psi] nitrogen and a temperature of 175 °C in an oven for 16 hours. After aging the drilling fluid was homogenized again with the Polytron mixer (3000 rpm/10 min). The fluid loss performance was measured at 150°C and a pressure difference of 500 psi using an OFITE HTHP Filter Press (OFI Testing Equipment, Houston) using OFITE 170-19 filter paper (2.7 micron pores) according to ISO 10416:2008. Filtrate was collected over a period of 30 minutes. The volume collected (filtrate volume after 30 min, FV 30) is a measure of the fluid loss. The lower the FV30 the better the filter is sealed by the additive and the lower is the fluid loss.

The results are shown in table 2.

### Examples 1 to 12, reference example Ref-1 and comparative examples C-1 to C-4

In examples 1 to 12, fluorinated acrylic polymers as given in table 2 were added to drilling fluid and tested according to the general procedure outlined above. Reference example REF-1 did not contain any fluid loss additive. In comparative examples C-1 a non-fluorinated acrylic polymer was used as fluid loss additive. In comparative examples C-2 and C-3, fluorinated acrylic microspheres were added as fluid loss. Comparative example C-4 was made with a drilling fluid to which a non-acrylic fluorinated polymer was added as fluid loss additive. The fluid loss was measured according to the general procedure outlined above. The results are reported in ml.

**Table 2 fluid loss measurement**

| Example | Polymer | Polymer Composition | Filtrate volume FV30 (ml) |
|---|---|---|---|
| REF-1 | / | No additive | 50 |
| Ex 1 | 1 | MeFBSEA/EHA/DMAEA (70/10/20) | 6.0 |
| Ex 2 | 2 | MeFBSEA/IOA/DMAEA (73/09/18) | 6.5 |
| Ex 3 | 3 | MeFBSEMA/IOA/DMAEA (70/10/20) | 5.2 |
| Ex 4 | 4 | MeFBSEA/IOA/4-vinyl pyridine (24/49/27) | 10.0 |
| Ex 5 | 5 | MeFBSEA/DMAEMA (78/22) | 10.0 |
| Ex 6 | 6 | MeFBSEA/DMAEA (3/97) | 10.0 |
| Ex 7 | 7 | MeFBSEA/IOA/DMAEA (14/56/30) | 4.8 |
| Ex 8 | 8 | MeFBSEA/IOA/DMAEA (14/56/30) | 6.0 |
| Ex 9 | 9 | MeFBSEA/IOA/DMAEA (14/56/30) | 4.6 |
| Ex 10 | 10 | MeFBSEA/IOA/DMAEA (30/50/20) | 3.8 |
| Ex 11 | 11 | Telomer C6 acrylate/IOA/ DMAEMA (14/56/30) | 4.6 |
| Ex 12 | 12 | MeFBSEA/IOA (20/80) | 5.6 |
| C-1 | 13 | IOA/DMAEMA (65/35) | (*) |
| C-2 | | EHA/AA/BDDA/MeFBSEA-microparticles (92.5/2/0.5/5) | 12.0 |
| C-3 | | EHA/IBOA/AA/BDDA/MeFBSEA-microparticles (77.5/10/2/0.5/10) | 23.0 |
| C-4 | | FC-2145 | 24.0 |

| | | | |
|---|---|---|---|
| Note : (*) : the drilling fluid turned into a not usable solid after aging. The fluid loss could not be measured. | | | |

## Claims

1. The use of a composition comprising a fluorinated acrylic polymer dissolved, suspended or dispersed in an organic liquid as an additive in a drilling fluid for preventing or reducing loss of the drilling fluid into material surrounding a borehole in a drilling operation to produce the borehole, wherein the fluorinated acrylic polymer comprises repeating units derived from at least one fluorinated acrylic monomer and further comprises units derived from at least one non-fluorinated acrylic monomer and wherein in case of a suspension or dispersion the polymer is present in particles of a particle size below 0.095 microns wherein the non-fluorinated acrylic monomer is represented by the formula
YXCOC(R')=CH₂
wherein Y is (R¹)(R²)N(CH₂)ₘ, R' is H or CH₃, m is an integer from 1 to 6, R1 and R2 independently represent H or an alkyl group, an aryl group or aralkyl group, X represents an O or N atom.

2. The use of claim 1 wherein the at least one fluorinated acrylic monomer is represented by the following formula (1):
CₙF₂ₙ₊₁Q¹CH₂CH₂XC(O)C(R)=CH₂
wherein n is an integer from 3 to 8, X represents oxygen or nitrogen, Q1 is an organic linking group selected from a chemical bond, a sulfonamido group or a carboxamido group and R is H or CH₃.

3. The use of claim 2 wherein the fluorinated acrylic monomer is selected from
C_{q}F_{2q+1}SO₂N(R')CH₂CH₂OC(O)C(R)=CH₂
and
CₚF₂ₚ₊₁CH₂CH₂OC(O)C(R)=CH₂
or a mixture thereof,
wherein R represents H or CH₃, R' represents CH₃ or C₂H₅, q is 4 or 6 and p is 4, 6 or 8.

4. The use according to claim 1 wherein the non-fluorinated acrylic monomer is an aminoalkyl acrylic monomer selected from N,N-dimethylaminoethyl (meth)actylate, N,N-dimethylaminomethyl (meth)acrylate, N,N-diethylaminomethyl (meth)acrylate, N,N-diethylaminoethyl (meth)acrylate, N,N dimethylaminopropyl (meth)acrylamide, N,N diethylaminopropyl (meth)acrylate and combinations thereof.

5. The use according to claim 4 wherein the non-fluorinated acrylic monomer is an alkyl acrylic monomer selected from isooctylacrylate, 2-ethylhexyl acrylate, butyl acrylate, ethyl acrylate, octadecyl acrylate and combinations thereof.

6. The use according to claim 1 wherein the polymer is substantially not cross-linked.

7. The use according to claim 1 wherein the organic liquid is selected from aromatic or aliphatic hydrocarbons, ketones, ethers, esters, polyethers and polyether alcohols.

8. The use according claim 1 wherein the polymer has a weight average molecular weight of from about 1,000 to about 50, 000 g/mole.

9. A drilling fluid comprising a composition as defined in claim 1 and further comprising at least 10% by weight of a second organic liquid.

10. The drilling fluid of claim 9 wherein the second organic liquid is selected from hydrocarbons having from 6 to 28 carbon atoms or polyethers having at least four ether oxygens or a combination or mixture thereof.

11. Method for reducing fluid loss of a drilling fluid into the material surrounding a borehole generated in a drilling operation, said method comprising adding to the drilling fluid a composition as defined in claim 1 and circulating said drilling fluid in the borehole during the drilling of the borehole.

## Patentansprüche

1. Verwendung einer Zusammensetzung, die ein in einer organischen Flüssigkeit gelöstes, suspendiertes oder dispergiertes fluoriertes Acrylpolymer umfasst, als Additiv in einer Bohrflüssigkeit zur Verhinderung oder Verringerung des Verlusts der Bohrflüssigkeit in ein Bohrloch umgebendes Material bei einem Bohrvorgang zur Bildung des Bohrlochs, wobei das fluorierte Acrylpolymer Wiederholungseinheiten umfasst, die sich von mindestens einem fluorierten Acrylmonomer ableiten, und ferner Einheiten umfasst, die sich von mindestens einem nichtfluorierten Acrylmonomer ableiten, und wobei im Fall einer Suspension oder Dispersion das Polymer in Teilchen mit einer Teilchengröße von weniger als 0,095 Mikron vorliegt, wobei das nichtfluorierte Acrylmonomer durch die Formel
YXCOC(R')=CH₂
wiedergegeben wird, worin Y für (R¹) (R²)N(CH₂)ₘ steht, R' für H oder CH₃ steht, m für eine ganze Zahl von 1 bis 6 steht, R1 und R2 unabhängig voneinander für H oder eine Alkylgruppe, eine Arylgruppe oder Aralkylgruppe stehen und X für ein O- oder N-Atom steht.

2. Verwendung nach Anspruch 1, wobei das mindestens eine fluorierte Acrylmonomer durch die folgende Formel (1) wiedergegeben wird:
CₙF₂ₙ₊₁Q¹CH₂CH₂XC (0) C (R) =CH₂
worin n für eine ganze Zahl von 3 bis 8 steht, X für Sauerstoff oder Stickstoff steht, Q1 für eine organische Brückengruppe, die aus einer chemischen Bindung, einer Sulfonamidogruppe oder einer Carboxamidogruppe ausgewählt ist, steht und R für H oder CH₃ steht.

3. Verwendung nach Anspruch 2, wobei das fluorierte Acrylmonomer aus
C_{q}F_{2q+1}SO₂N (R') CH₂CH₂OC (O) C (R) =CH₂
und
CₚF₂ₚ₊₁CH₂CH₂OC (O) C (R) =CH₂
oder einer Mischung davon ausgewählt ist,
worin R für H oder CH₃ steht, R' für CH₃ oder C₂H₅ steht, q für 4 oder 6 steht und p für 4, 6 oder 8 steht.

4. Verwendung nach Anspruch 1, wobei es sich bei dem nichtfluorierten Acrylmonomer um ein Aminoalkyl-acrylmonomer handelt, das aus N,N-Dimethylaminoethyl(meth)acrylat, N,N-Dimethylaminomethyl(meth)-acrylat, N,N-Diethylaminomethyl(meth)acrylat, N,N-Diethylaminoethyl(meth)acrylat, N,N-Dimethylaminopropyl(meth)acrylamid, N,N-Dimethylaminopropyl-(meth)acrylat und Kombinationen davon ausgewählt ist.

5. Verwendung nach Anspruch 4, wobei es sich bei dem nichtfluorierten Acrylmonomer um ein Alkylacrylmonomer handelt, das aus Isooctylacrylat, 2-Ethylhexylacrylat, Butylacrylat, Ethylacrylat, Octadecylacrylat und Kombinationen davon ausgewählt ist.

6. Verwendung nach Anspruch 1, wobei das Polymer weitgehend unvernetzt ist.

7. Verwendung nach Anspruch 1, wobei die organische Flüssigkeit aus aromatischen oder aliphatischen Kohlenwasserstoffen, Ketonen, Ethern, Estern, Polyethern und Polyetheralkoholen ausgewählt ist.

8. Verwendung nach Anspruch 1, wobei das Polymer ein gewichtsmittleres Molekulargewicht von etwa 1000 bis etwa 50.000 g/mol aufweist.

9. Bohrflüssigkeit, umfassend eine Zusammensetzung gemäß Anspruch 1 und ferner mindestens 10 Gew.-% einer zweiten organischen Flüssigkeit.

10. Bohrflüssigkeit nach Anspruch 9, wobei die zweite organische Flüssigkeit aus Kohlenwasserstoffen mit 6 bis 28 Kohlenstoffatomen oder Polyethern mit mindestens vier Ether-Sauerstoffatomen oder einer Kombination oder Mischung davon ausgewählt ist.

11. Verfahren zur Verringerung des Flüssigkeitsverlusts einer Bohrflüssigkeit in das ein bei einem Bohrvorgang gebildetes Bohrloch umgebende Material, bei dem man zu der Bohrflüssigkeit eine Zusammensetzung gemäß Anspruch 1 gibt und die Bohrflüssigkeit im Bohrloch während des Bohrens des Bohrlochs im Kreis führt.

## Revendications

1. Utilisation d'une composition comprenant un polymère acrylique fluoré dissous, en suspension ou dispersé dans un liquide organique comme additif dans une boue de forage, pour prévenir ou réduire la perte de la boue de forage dans le matériau entourant un trou de forage dans une opération de forage visant à produire le trou de forage, le polymère acrylique fluoré comprenant des unités de répétition dérivées d'au moins un monomère acrylique fluoré et comprenant en outre des unités dérivées d'au moins un monomère acrylique non fluoré et, dans le cas d'une suspension ou d'une dispersion, le polymère étant présent sous forme de particules ayant une taille de particule inférieure à 0,095 micron, le monomère acrylique non fluoré étant représenté par la formule
YXCOC(R')=CH₂
dans laquelle Y est (R¹)(R²)N(CH₂)ₘ, R' est un atome d'hydrogène ou un groupe CH₃, m est un nombre entier qui vaut de 1 à 6, R¹ et R² représentent indépendamment un atome d'hydrogène ou un groupe alkyle, un groupe aryle ou un groupe aralkyle, et X représente un atome d'oxygène ou un atome d'azote.

2. Utilisation selon la revendication 1, dans laquelle ledit au moins un monomère acrylique fluoré est représenté par la formule suivante (1) :
CₙF₂ₙ₊₁Q¹CH₂CH₂XC(O)C(R)=CH₂
dans laquelle n est un nombre entier qui vaut de 3 à 8, X représente un atome d'oxygène ou un atome d'azote, Q¹ est un groupe de liaison organique sélectionné parmi une liaison chimique, un groupe sulfonamido ou un groupe carboxamido, et R est un atome d'hydrogène ou un groupe CH₃.

3. Utilisation selon la revendication 2, dans laquelle le monomère acrylique fluoré est sélectionné parmi
C_{q}F_{2q+1}SO₂N(R')CH₂CH₂OC(O)C(R)=CH₂
et
CₚF₂ₚ₊₁CH₂CH₂OC(O)C(R)=CH₂
ou un mélange de ceux-ci,
R représentant un atome d'hydrogène ou un groupe CH₃, R' représentant un groupe CH₃ ou C₂H₅, q valant 4 ou 6 et p valant 4, 6 ou 8.

4. Utilisation selon la revendication 1, dans laquelle le monomère acrylique non fluoré est un monomère acrylique aminoalkyle sélectionné parmi le (méth)acrylate de N,N-diméthylaminoéthyle, le (méth)acrylate de N,N-diméthylaminométhyle, le (méth)acrylate de N,N-diéthylaminométhyle, le (méth)acrylate de N,N-diéthylaminoéthyle, le N,N-diméthylaminopropyle (méth)acrylamide, le (méth)acrylate de N,N-diéthylaminopropyle, et des combinaisons de ceux-ci.

5. Utilisation selon la revendication 4, dans laquelle le monomère acrylique non fluoré est un monomère acrylique alkyle sélectionné parmi l'acrylate d'isooctyle, l'acrylate de 2-éthylhexyle, l'acrylate de butyle, l'acrylate d'éthyle, l'acrylate d'octadécyle, et des combinaisons de ceux-ci.

6. Utilisation selon la revendication 1, dans laquelle le polymère n'est pratiquement pas réticulé.

7. Utilisation selon la revendication 1, dans laquelle le liquide organique est sélectionné parmi des hydrocarbures aromatiques ou aliphatiques, des cétones, des éthers, des esters, des polyéthers et des polyéthers alcools.

8. Utilisation selon la revendication 1, dans laquelle le polymère a une masse moléculaire moyenne en poids d'environ 1 000 à environ 50 000 g/mole.

9. Boue de forage comprenant une composition telle que définie dans la revendication 1 et comprenant en outre au moins 10 % en poids d'un deuxième liquide organique.

10. Boue de forage selon la revendication 9, dans laquelle le deuxième liquide organique est sélectionné parmi des hydrocarbures comportant 6 à 28 atomes de carbone ou des polyéthers comportant au moins 4 atomes d'oxygène éthéré ou une combinaison ou un mélange de ceux-ci.

11. Procédé de réduction de la perte d'un fluide sous forme de boue de forage dans le matériau entourant un trou de forage produit dans une opération de forage, ledit procédé comprenant l'addition à la boue de forage d'une composition telle que définie dans la revendication 1 et la circulation de ladite boue de forage dans le trou de forage durant le forage du trou de forage.
